# EUROPÄISCHE PATENTSCHRIFT

(11) **EP 0 588 780 B1**
(45) Veröffentlichungstag und Bekanntmachung des Hinweises auf die Patenterteilung: **19.06.1996**
(21) Anmeldenummer: 93890171.7
(22) Anmeldetag: 06.09.1993
(51) Int. Cl.: B60C 9/11, B60C 9/16, B60C 9/20

(54) **Festigkeitsträger**
Reinforcement
Renfort

(30) Priorität: 15.09.1992 AT 1835/92
(43) Veröffentlichungstag der Anmeldung: 23.03.1994
(73) Patentinhaber: Semperit Reifen Aktiengesellschaft, A-2514 Traiskirchen (AT)
(72) Erfinder: Stumpf, Horst, Dipl.-Ing., A-2551 Enzesfeld (AT)
(74) Vertreter: Vinazzer, Edith

(56) Entgegenhaltungen:
- EP-A- 0 319 515
- DE-C- 160 027
- DE-C- 320 725
- FR-A- 393 409
- FR-A- 465 228
- FR-A- 572 480
- GB-A- M6 324
- GB-A- M15 115
- GB-A- 2 015 937
- US-A- 2 059 764

## Beschreibung

Die Erfindung betrifft einen Festigkeitsträger für eine Gürtellage eines Reifens, insbesondere eines Radialreifens, welcher Festigkeitsträger aus einem im wesentlichen ebenen Drahtgeflecht besteht, welches aus einer Vielzahl von miteinander verflochtenen, spiralförmig oder im wesentlichen S- oder wellenförmig vorgeformten Drahtteilen besteht.

Herkömmliche Gürtelverbände für Radialreifen beinhalten zumindest zwei Gürtellagen, die im wesentlichen aus in Gummimaterial eingebetteten Kordfäden, Metalldrähten und dergleichen bestehen. So ist es beispielsweise bei PKW-Reifen üblich, den Gürtelverband aus zwei Stahlkordlagen zu bilden, deren Korde bezüglich der Umfangsrichtung unter Winkeln von ca. + 20° bzw. ca. - 20° verlaufen. Diese Konstruktion gibt dem Gürtelverband die erforderliche Festigkeit und soll die gewünschte Umfangsfestigkeit des Reifens und die bei Seitenkraftbeanspruchung erforderliche Quersteifigkeit gewährleisten. Bei Reifen, die für höhere Geschwindigkeiten geeignet sind, ist es ferner üblich, eine oder mehrere zusätzliche Abdecklagen mit in 0°-Richtung verlaufenden Festigkeitsträgern aus Nylon oder Aramid vorzusehen. Bei den bekannten orthogonalen Zweilagenkonstruktionen entsteht bei Zugbelastungen in Folge des Schichtungsabstandes ein innerlich nicht ausgeglichenes Randtorsionsmoment. Zwischen den einzelnen Lagen entstehen somit Schubverformungen und als Folge davon Interplystresses, die damit einhergehenden unerwünschten Verzerrungen und Verformungen im Bereich des Gürtels und des Laufstreifens beeinträchtigen die Lebensdauer des Reifens. Es sind ferner bereits Festigkeitsträger für Gürtellagen vorgeschlagen worden, die aus einem Drahtgeflecht bestehen. So ist beispielsweise aus der US-A 2059764 ein Reifen gemäß Oberbegriff des Anspruchs 1 (bekannt, dessen Laufstreifen mit einer gürtelartigen Verstärkung versehen ist, die aus einer Anzahl von in eine Gummimischung eingebetteten Streifen aus einem Drahtgeflecht besteht.

Die Erfindung hat sich die Aufgabe gestellt, einen aus einem Drahtgeflecht bestehenden Festigkeitsträger für eine Gürtellage eines Radialreifens so zu gestalten, daß sie den Anforderungen an einen modernen Radialreifen, beispielsweise hinsichtlich Hochgeschwindigkeitstauglichkeit, gerecht wird und die oben erläuterten Probleme der herkömmlichen Gürtelverbände von Radialreifen vermeidet.

Gelöst wird die gestellte Aufgabe erfindungsgemäß dadurch, daß die Windungsdichte, welche die Anzahl der spiral- oder S-förmigen Einzelelemente des Drahtgeflechtes pro Längeneinheit ist, über die Gürtelbreite betrachtet variiert, wobei insbesondere die in axialer Richtung außen liegenden Randbereiche des Drahtgeflechtes eine größere Windungsdichte aufweisen.

Mit einem Festigkeitsträger nach der Erfindung wird eine Gürtellage geschaffen, die bei einfacher Konstruktion zwei bevorzugte natürliche Bewehrungsrichtungen, und zwar in einer einzigen Lage, aufweist. So kann eine Gürtellage mit einem Festigkeitsträger nach der Erfindung ohne weiteres einen herkömmlichen Gürtelverband mit zwei Lagen mit gekreuzten Festigkeitsträgem ersetzen. Infolgedessen treten die oben geschilderten Probleme im Zusammenhang mit Schubverformungen bei Zugbelastung nicht mehr auf. Wird eine nach der Erfindung gestaltete Gürtellage mit mindestens einer weiteren herkömmlichen Gürtellage kombiniert, so sind zumindest die angesprochenen Probleme wesentlich verringert. Dazu trägt auch eine entsprechende Variation der Windungsdichte bei, die zudem dann, wenn die Windungsdichte in den Randbereichen des Gürtels größer ist, eine Erhöhung der Umfangssteifigkeit in diesen Bereichen bewirkt, was die für höhere Fahrzeuggeschwindigkeiten erforderliche Festigkeit sicherstellt.

In einer Gürtellage wird insbesondere die Flechtrichtung mit der axialen Richtung in Übereinstimmung gewählt werden. Dabei können die freien Endbereiche des Drahtgeflechtes miteinander verflochten werden, so daß ein zylindrischer, geschlossener Ring entsteht. Vorteilhafterweise wird somit eine Stoßstelle, die ja bekannterweise problematisch bei der Herstellung eines Reifens ist, vermieden. Besteht der Festigkeitsträger nach der Erfindung aus spiralförmig miteinander verflochtenen Drahtteilen so kann eine Beeinflussung der Umfangssteifigkeit und der Quersteifigkeit dadurch erzielt werden, daß den Einzelspiralen bestimmte günstige Grundformen verliehen werden. Solche Grundformen sind insbesondere eine ovale Form oder eine Kreisform, wobei bei der Ausführung mit einer ovalen Grundform, die längere Achse des Ovals entweder der Umfangsrichtung oder der axialen Richtung zugeordnet werden kann.

Als Material für einen Festigkeitsträger nach der Erfindung kommt insbesondere ein drucksteifes Drahtmaterial, beispielsweise Kabelmaterial in Frage. Dieses kann vor der spiralförmigen bzw. S-förmigen Verformung mit anschließendem Flechtvorgang mit einer Gummimischung umspritzt werden.

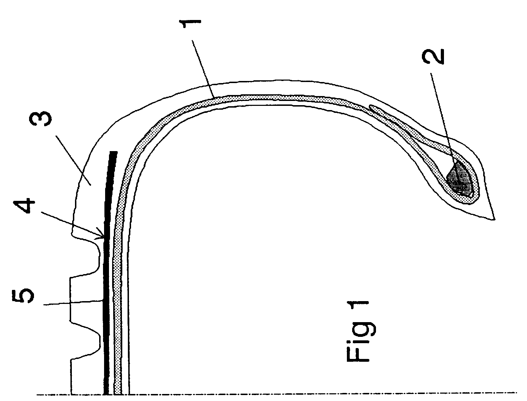

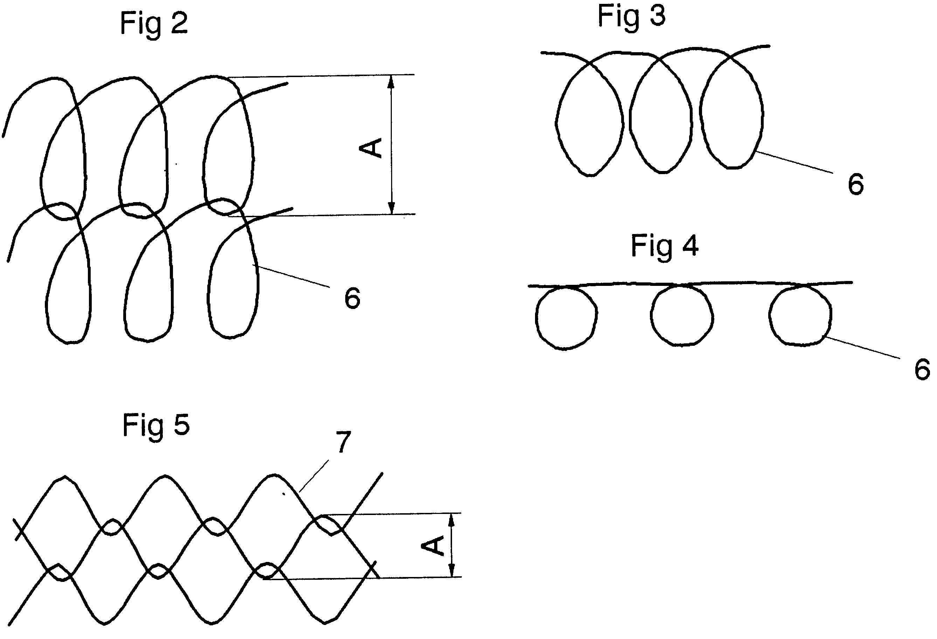

Weitere Merkmale, Vorteile und Einzelheiten der Erfindung werden nun anhand der Zeichnung, die mehrere Ausführungsbeispiele darstellt, näher beschrieben. Dabei zeigt Fig. 1 schematisch einen Querschnitt durch einen Fahrzeugreifen mit einer Ausführungsform eines gemäß der Erfindung gestalteten Gürtelverbandes, Fig. 2, 5 und 6 Teildraufsichten auf Ausführungsformen von erfindungsgemäßen Festigkeitsträgem und Fig. 3 und Fig. 4 weitere Varianten der in Fig. 2 dargestellten Ausführungsform.

Fig. 1 zeigt den schematischen Aufbau eines Fahrzeugreifens mit einer in den Reifenkörper eingebetteten Karkasse 1, Wulstbereichen mit Wulstkernen 2, einem Laufstreifen 3 und einem zwischen diesem und der Karkasse 1 angeordneten Gürtel 4. Gemäß der in Fig. 1 dargestellten Ausführungsform enthält der Gürtel 4 eine einzige Lage 5 mit einem nach der Erfindung gestalteten Festigkeitsträger, dessen erste Ausführungsvariante nun unter Bezugnahme auf Fig. 2 näher erläutert wird. Dabei setzt sich dieser Festigkeitsträger aus spiralförmig und im wesentlichen in einer Ebene geformten Drahtteilen 6 zusammen, die miteinander verflochten bzw. verkettet sind. Jeder Drahtteil 6 besteht dabei aus einem vorgeformten, mit einer Vielzahl von spiraligen Windungen versehenen Draht. Die Flechtrichtung bzw. die Erstreckungsrichtung der spiralförmigen Drahtteile 6 stimmt dabei mit der axialen Richtung, vom Gürtel her betrachtet, überein. Demnach setzt sich der gesamte Festigkeitsträger über den Reifenumfang aus einer Vielzahl von miteinander verflochtenen spiralförmigen Drahtteilen 6 zusammen. Dabei können die freien Endbereiche des Festigkeitsträgers für eine solche Gürtellage ebenfalls miteinander verflochten werden, so daß ein zylindrischer geschlossener Ring entsteht. Durch die Wahl der Spiralform können die beiden Bewehrungsrichtungen, wie sie bei einem herkömmlichen Gürtelveband mit zwei Lagen mit einander kreuzenden Festigkeitsträgem gegeben sind, sehr gut nachgestellt werden. Dabei können auf einfache Weise zusätzlich die Umfangssteifigkeit und die Quersteifigkeit des Gürtels beeinflußt werden, indem die Grundform der Einzelelemente entsprechend gewählt wird. Besonders vorteilhaft ist in diesem Zusammenhang die in Fig. 2 dargestellte etwa ovale Grundform der Einzelspiralen, wobei die längere Achse des Ovals der Umfangsrichtung zugeordnet ist.

Fig. 4 zeigt eine Ausführungsvariante bei der diese Einzelspiralen kreisförmig bzw. im wesentlichen kreisförmig gestaltet sind, Fig. 3 zeigt eine Variante bei der Ovale gebildet werden, deren längere Achsen der Umfangsrichtung zugeordnet sind.

Zur Bildung der Gürtellage wird der fertiggestellte Festigkeitsträger, wie es auch bei herkömmlichen Festigkeitsträgern nach dem Stand der Technik üblich ist, in eine Gummimischung (Gürtelaufpreßmischung) eingebettet.

Bei der Ausführungsvariante gemäß Fig. 5 ist als Festigkeitsträger ein Drahtgeflecht vorgesehen, bei dem eine Vielzahl von vorgeformten wellen- oder S-förmigen Drahtteilen 7 miteinander verflochten sind. Auch bei dieser Ausführungsvariante stimmt die Flechtrichtung mit der axialen Richtung, vom Gürtel aus betrachtet, überein. Die freien Enden des Festigkeitsträgers können auch bei dieser Variante zu einem geschlossen Ring zusammengefügt werden.

Bei sämtlichen Ausführungsvarianten werden Drahtteile 6, 7 mit einer Elementerstreckung A verwendet, die in der Größenordnung von einigen Millimetern, insbesondere 2 bis 10 mm gewählt wird.

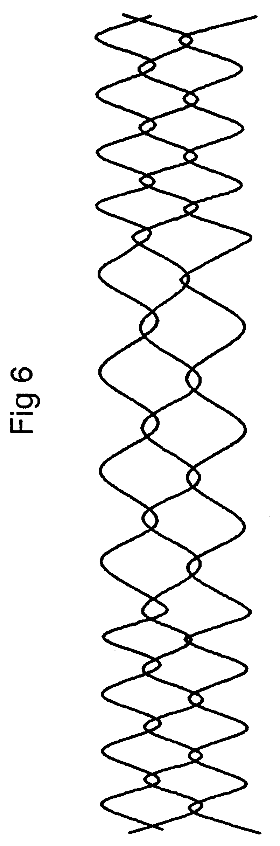

Gemäß der Erfindung, die in Fig. 6 für einen Festigkeitsträger nach Fig. 5 dargestellt ist, wird die Windungsdichte, also die Anzahl der Einzelelemente pro Längeneinheit, über die Reifenbreite variiert. Bevorzugt wird dabei an den in axialer Richtung außen liegenden Randbereichen eine größere Windungsdichte gewählt, als im Mittelbereich. Damit kann auf einfache Weise die Umfangssteifigkeit in den Gürtelrandbereichen erhöht werden, um die für höhere Geschwindigkeiten erforderliche Gürtelfestigkeit zu erzielen.

Als Material für den Festigkeitsträger kommt insbesondere ein drucksteifes Drahtmaterial, beispielsweise Kabelmaterial in Frage. Dieses kann vor der spiralförmigen oder wellenförmigen Verformung mit einer Gummimischung umspritzt werden.

## Patentansprüche

1. Festigkeitsträger für eine Gürtellage eines Reifens, insbesondere eines Radialreifens, welcher Festigkeitsträger aus einem im wesentlichen ebenen Drahtgeflecht besteht, welches aus einer Vielzahl von meiteinander verflochtenen, spiralförmig oder im wesentlichen S- oder wellenförmig vorgeformten Drahtteilen besteht, dadurch gekennzeichnet, daß die Windungsdichte, welche die Anzahl der spiral-oder S-förmigen Einzelelemente des Drahtgeflechtes pro Längeneinheit ist, über die Gürtelbreite betrachtet variiert, wobei insbesondere die in axialer Richtung außen liegenden Randbereiche des Drahtgeflechtes eine größere Windungsdichte aufweisen.

2. Festigkeitsträger nach Anspruch 1, dadurch gekennzeichnet, daß die Flechtrichtung des Drahtgeflechtes mit der axialen Richtung übereinstimmt.

3. Festigkeitsträger nach Anspruch 1 oder 2, dadurch gekennzeichnet, daß zur Bildung eines im wesentlichen zylindrischen, geschlossenen Ringes die freien Endbereiche des Drahtgeflechtes miteinander verflochten sind.

4. Festigkeitsträger nach einem der Ansprüche 1 bis 3, dadurch gekennzeichnet, daß die Einzelspiralen eine ovale oder kreisförmige Grundform aufweisen.

5. Festigkeitsträger nach einem der Ansprüche 1 bis 4, dadurch gekennzeichnet, daß die Elementerstreckung der spiral- oder S-förmigen Drahtteile (6, 7) einige Millimeter, insbesondere 2 bis 10 mm beträgt.

6. Festigkeitsträger nach einem der Ansprüche 1 bis 5. dadurch gekennzeichnet, daß er aus einem drucksteifen Drahtmaterial, insbesondere aus einem Kabelmaterial besteht.

7. Verfahren zur Herstellung eines Festigkeitsträgers nach einem der Ansprüche 1 bis 6, dadurch gekennzeichnet, daß das Drahtmaterial mit einer Gummimischung umspritzt wird, spiral- oder S-förmig verformt wird, dem Flechtvorgang unterzogen wird und schließlich in eine Gummimischung eingebettet wird.

8. Radialreifen, der zumindest eine Gürtellage mit einem Festigkeitsträger nach einem der Ansprüche 1 bis 7 enthält.

## Claims

1. Reinforcing member for a belt ply of a tyre, more especially of a radial tyre, which reinforcing member comprises a substantially flat wire netting which comprises a plurality of intertwined pieces of wire which have been preshaped in a substantially S-shaped or undulatory configuration, characterised in that the coil density, which is the number of helical or S-shaped individual elements of the wire netting per unit of length, varies when viewed over the belt width, the externally situated edge regions of the wire netting, when viewed with respect to the axial direction, more especially having a greater coil density.

2. Reinforcing member according to claim 1, characterised in that the intertwining direction of the wire netting coincides with the axial direction.

3. Reinforcing member according to claim 1 or 2, characterised in that the free end regions of the wire netting are intertwined to form a substantially cylindrical, closed ring.

4. Reinforcing member according to one of claims 1 to 3, characterised in that the individual spirals have an oval or circular basic configuration.

5. Reinforcing member according to one of claims 1 to 4, characterised in that the elements of the helical or S-shaped pieces of wire (6, 7) extend over a few millimetres, more especially between 2 and 10 mm.

6. Reinforcing member according to one of claims 1 to 5, characterised in that it is formed from a pressure-resistant wire material, more especially from a cable material.

7. Method of producing a reinforcing member according to one of claims 1 to 6, characterised in that the wire material is sprayed all around with a rubber mixture, deformed in a helical or S-shaped manner, subjected to the intertwining process and finally embedded in a rubber mixture.

8. Radial tyre, which includes at least one belt ply having a reinforcing member according to one of claims 1 to 7.

## Revendications

1. Renfort pour une couche de ceinture d'un pneumatique, en particulier d'un pneumatique à carcasse radiale, lequel renfort est constitué d'un tressage métallique sensiblement plan, consistant en un grand nombre de segments de fil métallique tressés ensemble et préformés en une configuration spiroïdale ou pour l'essentiel en S, voire ondulée, caractérisé par le fait que la densité d'enroulement, qui est le nombre des éléments individuels, spiroïdaux ou en S, que le tressage métallique présente par unité de longueur, varie considérée sur la largeur de la ceinture, les régions marginales du tressage métallique, qui sont situées à l'extérieur dans le sens axial, possédant notamment une densité d'enroulement supérieure.

2. Renfort selon la revendication 1, caractérisé par le fait que la direction d'entrelacement du tressage métallique coïncide avec la direction axiale.

3. Renfort selon la revendication 1 ou 2, caractérisé par le fait que les régions extrêmes libres du tressage métallique sont tressées ensemble pour former un anneau fermé sensiblement cylindrique.

4. Renfort selon l'une des revendications 1 à 3, caractérisé par le fait que les spirales individuelles présentent une configuration de base ovale ou circulaire.

5. Renfort selon l'une des revendications 1 à 4, caractérisé par le fait que l'étendue des éléments des segments de fil métallique (6, 7) spiroïdaux ou configurés en S mesure quelques millimètres, notamment de 2 à 10 mm.

6. Renfort selon l'une des revendications 1 à 5, caractérisé par le fait qu'il consiste en un matériau du type fil métallique rigide à la pression, notamment en un matériau du type câble.

7. Procédé de fabrication d'un renfort selon l'une des revendications 1 à 6, caractérisé par le fait que le matériau du type fil métallique est enrobé par injection d'un mélange de caoutchouc, est déformé en une configuration spiroïdale ou en S, est soumis au processus de tressage et est, pour finir, noyé dans un mélange de caoutchouc.

8. Pneumatique à carcasse radiale, renfermant au moins une couche de ceinture munie d'un renfort selon l'une des revendications 1 à 7.
